# EUROPEAN PATENT SPECIFICATION

(11) **EP 2 803 836 B1**
(45) Date of publication and mention of the grant of the patent: **25.05.2016**
(21) Application number: 13168274.2
(22) Date of filing: 17.05.2013
(51) Int. Cl.: F02B 29/04, F02M 25/022, F02M 35/08, F02C 3/30

(54) **Water injection in combustion engines**
Wassereinspritzung in Verbrennungsmotoren
Injection d'eau dans des moteurs à combustion

(43) Date of publication of application: 19.11.2014
(73) Proprietor: Caterpillar Energy Solutions GmbH, 68167 Mannheim (DE)
(72) Inventor: Braun, Michael, 69198 Schriesheim (DE); Stellwagen, Karl, 67227 Frankenthal (DE)
(74) Representative: Kramer Barske Schmidtchen Patentanwälte PartG mbB

(56) References cited:
- EP-A1- 0 076 529
- EP-A2- 2 161 438
- WO-A1-2009/045154
- WO-A2-2010/128127
- DE-A1-102006 054 227
- FR-A1- 2 936 023
- FR-A1- 2 957 980
- US-A1- 2013 067 913
- US-B2- 8 371 278

## Description

### Technical Field

The present disclosure relates to water injection in combustion engines, and more particularly to a method and device for collecting water for water injection in turbines and reciprocating engines.

### Background

A well known technique to increase the power output of combustion engines is water injection. As a result of spraying water (or a mixture of alcohol and water) into charge air or a mixture of charge air and fuel before combustion, compression work in cylinders of a reciprocating engine, or in a gas turbine compressor of a gas turbine, can be reduced due to the cooling effect of evaporating water droplets. Specifically, the heat of evaporation is removed from the charge air or mixture of charge air and fuel which reduces the specific power consumption required for the compression. A decreased compression power consumption leads to an increased power output of the combustion engine.

Moreover, the cooling effect of the evaporating water may further decrease the knocking tendency (anti detonation) and the generation of nitrogen oxides (NOₓ) due to the reduction of distributed heat peaks during the combustion.

Water injection is applicable for gas turbines and reciprocating engines. In gas turbines, water may be injected into (an inlet of) of a gas turbine compressor, a diffuser directly upstream of the combustor, or directly into the combustor, whereas in reciprocating engines, water may be injected into an air inlet (manifold), or directly into the cylinder.

For example, US 8,371,278 B2 discloses a high flow EGR (exhaust gas recirculation) system comprising EGR coolers and a water droplet condensation collector and reservoir. A pump is controlled to inject the water at appropriate conditions to the engine adjacent each cylinder.

As a further example, WO 2009/045154 A1 relates to an engine. The engine includes a cooler in an inlet line for cooling compressed inlet air, and a further cooler in an EGR line. Condensate from the coolers is provided to respective engine cylinders.

WO 2010/128127 A2 discloses a gas engine comprising a gaseous fuel and air mixer arranged upstream of an air intake compressor and a charge air cooler.

Furthermore, US 2013/067913 A1 discloses a gas engine comprising an intercooler for cooling a gas mixture that is pre-mixed in a gas mixer. As the gas mixture is cooled in the intercooler, water condenses. A vapor liquid separator separates said condensed water from air and fuel gas, and discharges the condensed water to atmosphere.

The present disclosure is directed, at least in part, to improving or overcoming one or more aspects of prior systems.

### Summary of the Disclosure

According to a first aspect, the present disclosure relates to a reciprocating gaseous fuel combustion engine according to claim 1.

According to another aspect, the present disclosure relates to a method according to claim 8.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 generically shows a schematical drawing of an engine according to the present disclosure;
Fig. 2 generically shows a schematical drawing of another engine according to the present disclosure; and
Fig. 3 shows an exemplary embodiment of an engine according to the present disclosure in which the engine is embodied as a gaseous fuel engine operable with a gaseous fuel.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that water injection in engines may consume a considerable amount of water. Accordingly, it is desirable to have a rich water source for supplying the water injectors. Hereinafter, an engine is disclosed which comprises at least one water collector for collecting water and providing the same to the water injectors.

The present disclosure is further based in part on the realization that water injectors may require distilled water for proper operation. The water supply system disclosed herein may be capable to provide said distilled water to the water injectors.

Moreover, the present disclosure is further based in part on the realization that providing a redundant system including two water supply systems for supplying water for water injection may provide a fail safe system which is capable to provide water even if one water supply system is temporally not capable to provide water to the water injectors in the required amount.

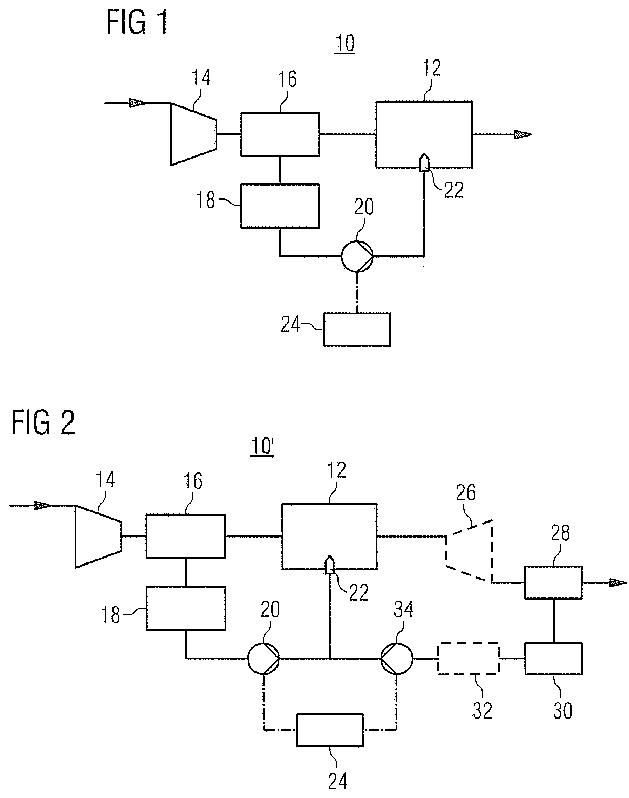

Referring to Fig. 1, an exemplary engine 10 is shown generically. Engine 10 comprises a combustion unit 12 configured to combust fuel to generate a mechanical output. Engine 10 may be a reciprocating engine or a gas turbine which may include features not shown, such as further air system components, further cooling systems, peripheries, drivetrain components, etc. Additionally, engine 10 may be used to power any machine or other device, including, but not limited to, locomotive applications, on-highway trucks or vehicles, off-highway trucks or machines, earth moving equipment, generators, planes, aerospace applications, marine applications, offshore applications, pumps, stationary equipment, or other engine powered applications. Engine 10 may be of any size, and, in embodiments in which engine 10 is embodied as reciprocating engine, engine 10 may have any number of cylinders, and in any configuration (for example, "V," in-line, radial, etc.). Additionally, engine 10 may be powered with any fuel including, but not limited to, diesel, heavy fuel oil, gasoline, and/or gaseous fuels. Engine 10 is a combustion engine which may be either an internal combustion engine or an external combustion engine. For example, engine 10 may be a reciprocating internal combustion engine configured to be operated with a gaseous fuel.

Accordingly, combustion unit 12 may either comprise a plurality of cylinder units with pistons reciprocating therein, or a gas turbine combustor fluidly connected upstream of a plurality of turbine blades. Combustion unit 12 is configured to receive a stream of charge air and fuel, combust the same, and exhaust a stream of exhaust gas.

Upstream of combustion unit 12, a compressor 14 is fluidly connected to a first cooler 16 which in turn is fluidly interconnected between compressor 14 and combustion unit 12. Additionally, a further compressor (not shown) may be provided upstream of compressor 14.

First cooler 16 is configured as a gas cooler which is capable of cooling a passing gas such that, possibly as a side effect, water condenses from the gas. Depending on the engine type, first cooler 16 may be configured as a charge air cooler, or may be configured as a mixture cooler for cooling a mixture of charge air and gaseous fuel to be supplied to combustion unit 12.

In some embodiments, first cooler 16 may be an intercooler fluidly interconnected between two compressors.

In embodiments in which engine 10 is embodied as a gas turbine, first cooler 16 may be any cooler upstream of a gas turbine combustor, for example, a pre cooler upstream of a gas turbine compressor, any intercooler fluidly interconnected between two compressor steps, or a cooler fluidly connected downstream of the gas turbine compressor.

A first water collector 18 is fluidly connected to first cooler 16 to collect condensing water originating from first cooler 16. First water collector 18 may be integrally formed with first cooler 16 or may be separately provided. A first pump 20 is fluidly interconnected between a water outlet of first water collector 18 and at least one water injector 22 configured to inject (spray) water in any water injection application for combustion engines. Direct water injectors are configured to directly inject water into combustion unit 12 which is either defined by cylinder units of a reciprocating engine, or defined by the gas turbine combustor of a gas turbine. In contrast, indirect water injectors are configured to inject water upstream of combustion unit 12, for example, into an inlet of a gas turbine compressor, into a diffuser upstream of the gas turbine combustor, or into an air inlet (manifold) of a reciprocating engine. Operation of first pump 20 is controlled by a control unit 24 connected thereto via a control connection (indicated by a dashed dotted line in Fig. 1).

Turning to Fig. 2, an engine 10' is shown with additional components compared to engine 10 of Fig. 1.

Engine 10' comprises an exhaust gas turbine 26 fluidly connected downstream of combustion unit 12, and a second cooler 28 fluidly connected downstream of exhaust gas turbine 26. Naturally, in case engine 10' is configured as a gas turbine, a separate exhaust gas turbine 26 may be not provided as the hot exhaust gas originating from the gas turbine combustor is already expanded in the turbine blades of the gas turbine.

Similar to first cooler 16, second cooler 28 is configured as a gas cooler which is capable of cooling passing exhaust gas such that, possibly as a side effect, water condenses from the exhaust gas. The condensed water is collected by a second water collector 30 fluidly connected downstream of second cooler 28. Second water collector 30 may be integrally formed with second cooler 28 or may be separately provided.

In some embodiments, exhaust gas turbine 26 and second cooler 28 may be part of an exhaust gas recirculation (EGR) system.

Depending, for example, on the engine type, the water injection type (direct or indirect), and the cleanliness of the condensed water from the exhaust gas, a purification device 32 may be provided downstream of second water collector 30 to purify the condensed water. In some embodiments, purification device 32 may be also fluidly connected to first water collector 18 to purify water therefrom, for example, in applications in which condensing water from first water collector 18 may be not already distilled due to, for example, polluted charge air.

A second pump 34 is fluidly interconnected between the at least one water injector 22 and between a water outlet of second water collector 30. Alternatively, a single pump may be provided which functions as both first pump 20 and second pump 34. Operation of both pumps 20 and 34 may be controlled by control unit 24 via a control connection (indicated by a dashed dotted line in Fig. 2).

In some embodiments, a first water cooler (not shown) may be provided downstream of first water collector 18, and/or a second water cooler (not shown) may be provided downstream of second water collector 30. Alternatively, no water cooler may be provided, or a common water cooler (not shown) may be provided downstream of both a water outlet of first water collector 18 and a water outlet of second water collector 30.

As an example of engine 10 generically described above in connection with Figs. 1 and 2, Fig. 3 shows an internal combustion engine (also referred with reference numeral 10) configured as a reciprocating engine (piston engine) and configured to operate with gaseous fuels.

Combustion unit 12 of reciprocating gaseous fuel engine 10 comprises an air inlet 36, a plurality of cylinder units 38, and an exhaust manifold 40, all being fluidly connected in series. Air inlet 36 is fluidly connected downstream of first cooler 16 which is embodied as a mixture cooler for cooling a mixture of gaseous fuel and charge air originating from compressor 14. Each cylinder unit 38 includes one of a plurality of water injectors 22 configured to directly inject water into the combustion chamber of the respective cylinder unit 38. Exhaust gas manifold 40 is fluidly connected upstream of exhaust gas turbine 26.

### Industrial Applicability

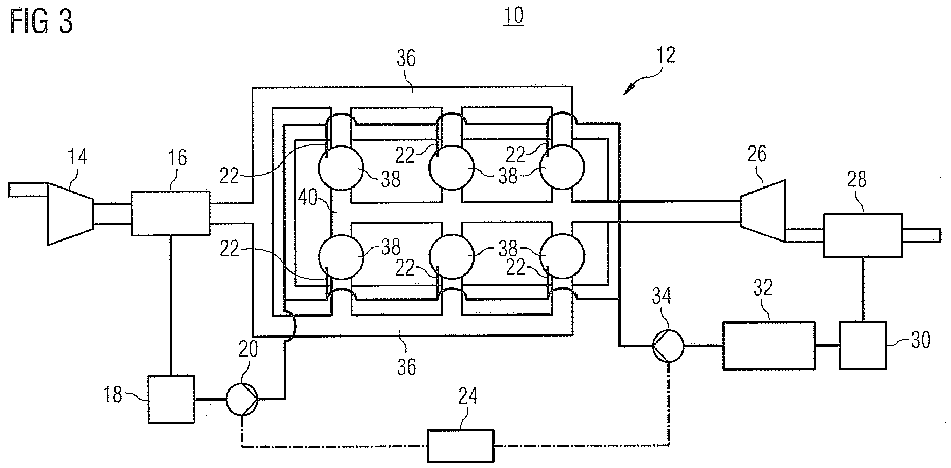

In the following operation of engine 10 is exemplary described in connection with reciprocating gaseous fuel engine 10 depicted in Fig. 3. One skilled in the art will appreciate that some of the following features and specifics may be not applicable on other engine types, whereas further features and specifics may be applicable on those other engine types which are not described in the following in connection with reciprocating gaseous fuel engine 10.

During operation, compressor 14 pressurizes a mixture of charge air and gaseous fuel to a preset level, for example, up to 5 bar. Thereby, a temperature of the mixture increases. The mixture is cooled in first cooler 16, for example, down to a temperature of 50°C, which may lead to water condensation. As one skilled in the art will appreciate, the amount of water condensation particularly dependents on the humidity of the charge air and the charging pressure.

Said condensing water is collected by first water collector 18, and supplied to water injectors 22 via first pump 20. Water injectors 22 inject water directly into the combustion chambers of cylinder units 38 during operation of internal combustion engine 10.

After combustion, exhaust gas is expanded in exhaust gas turbine 26 and subsequently cooled in second cooler 28 and, thereby, condenses water from the exhaust gas. The condensed water is collected by second cooler 28 and supplied to water injectors 22 via second pump 34. Depending on the purification degree of the condensed water from the exhaust gas, a purification device 32 may be provided downstream of second water collector 30 to purify the condensed water prior injection via water injectors 22.

In the shown embodiment, injection of water into cylinder units 38 is controlled by control unit 24 which controls pumps 20 and 34. Alternatively or additionally, control unit 24 may directly control operation of water injectors 22.

A redundant water supply system for supplying water to water injectors 22 may be provided by providing two water collectors 18 and 30. The redundant system may be either operated in that always both water collectors 18 and 30 are used to provide water to water injectors 22, or in that control unit 24 activates second pump 34 if the first pump 20 delivers a water amount below a preset water threshold. That may be, for example, the case if the charge air has a relatively low humidity, for example, below 30 %. Naturally, the condensing water amount further strongly depends on the environmental air temperature and the charging pressure as well as the cooling capability of first cooler 16.

In the following, if abstracting away from the exemplary embodiment of engine 10 described above, the underlying method for controlling engine 10 according to the present disclosure is described.

Said method for controlling engine 10 which is configured to apply water injection, comprises cooling charge air. Thereby, water condenses. Additionally to cool charge air, a gaseous fuel already mixed with the charge air prior cooling may be also cooled. This may be, for example, the case for gas turbines and reciprocating gaseous fuel engines. The condensed water is collected and provided for water injection in engine 10. Specifically, the condensed water may be supplied to or upstream of a combustion zone of engine 10. In case of a gas turbine, the combustion zone may be formed by an internal or external combustor, whereas in the case of a reciprocating engine, the combustion zone may be formed by combustion chambers of cylinder units 38. For example, upstream of a combustion zone may refer to a compressor inlet in case of a gas turbine, or may refer to an air inlet (manifold) in case of a reciprocating engine.

Prior cooling of charge air, or a mixture of charge air and gaseous fuel, the charge air and the mixture of charge air and gaseous fuel may be pressurised via a compressor, respectively. Thereby, a temperature of the charge air or the mixture of charge air and gaseous fuel increases.

During operation of engine 10, exhaust is generated in the combustion zone(s) due to combustion of a fuel together with charge air. In some embodiments, the exhaust gas may be cooled down by an exhaust gas cooler. Thereby, water may condense from the exhaust gas. The condensing water may be collected and supplied to or upstream of the combustion zone.

Depending on the temperature of the collected water from the charge air, the mixture of charge air and gaseous fuel, and/or the exhaust gas, the collected water may be additionally cooled prior injection to increase the cooling effect of the water injection. For example, the temperature of condensed water from the exhaust gas may be almost 100°C before cooling, and about 50°C after cooling.

Depending on a purification degree of the collected water and the used water injection method, the collected water may be purified before being injected. In some embodiments, water injectors 22 may require distilled water for injection such that the collected water if not already being pure, may have to be purified by a purification device if one tries to maintain a long service life of water injectors 22.

Water may be supplied to water injectors 22 from condensed water originating from the charge air, the mixture of charge air and gaseous fuel, and/or the exhaust gas. In some embodiments, an amount of condensed water from the charge air, or the mixture of charge air and gaseous fuel may be determined, the determined condensed water amount may be compared with a preset water threshold, and the collected condensed water from the exhaust gas may be only supplied to the combustion zone if the determined condensed water amount from the charge air or the mixture is below the preset water threshold. This may ensure, that even in environments with very low humidity, enough water may be available for water injection.

Determining a condensed water amount may be done directly by measuring the condensing water amount, or may be done indirectly, for example, by measuring an air humidity of the environment which constitutes the source for the charge air.

The above described system may provide a rich water source formed by first water collector 18 and optionally second water collector 30 for providing water for water injection. A separate water tank including water may be not longer required for water injection. This may be particularly of interest for large combustion engines used, for example, in marine ships, offshore applications, and power stations.

Moreover, in embodiments including both water collectors 18 and 30, a redundant system may be provided which is capable to provide water even if the air humidity of the charge air may be too low for condensing enough water required for water injection.

Although the preferred embodiments of this invention have been described herein, improvements and modifications may be incorporated without departing from the scope of the following claims.

## Claims

1. A reciprocating gaseous fuel combustion engine (10) comprising:
a combustion unit (12) configured to receive a stream of charge air and gaseous fuel;
at least one water injector (22) configured to inject water into or upstream of the combustion unit (12);
a first cooler (16) fluidly connected upstream of the combustion unit (12) and configured to cool a mixture of charge air and gaseous fuel; and
a first water collector (18) fluidly interconnected between the first cooler (16) and the at least one water injector (22), the first water collector (18) being configured to collect condensed water and to provide the collected water to the at least one water injector (22).

2. The reciprocating gaseous fuel combustion engine (10) of claim 1, further comprising:
a plurality of cylinder units (38); and
an air inlet (36) fluidly connected upstream of the plurality of cylinder units (38);
wherein each cylinder unit (38) comprises one water injector (22) configured to inject water into the cylinder unit (38), and/or at least one water injector (22) is configured to inject water into the air inlet (36).

3. The reciprocating gaseous fuel combustion engine (10) of any one of the preceding claims, further comprising at least one of:
a first pump (20) fluidly interconnected between the first water collector (18) and the at least one water injector (22); and/or
at least one compressor (14) fluidly connected upstream of the first cooler (16).

4. The reciprocating gaseous fuel combustion engine (10) of any one of the preceding claims, further comprising:
a second cooler (28) fluidly connected downstream of the combustion unit (12); and
a second water collector (30) fluidly interconnected between the second cooler (28) and the at least one water injector (22), the second water collector (30) being configured to collect condensed water and to provide the collected water to the at least one water injector (22).

5. The reciprocating gaseous fuel combustion engine (10) of claim 4,
the first pump (20) is further fluidly connected downstream of the second water collector (30); and/or
the combustion engine further comprises a second pump (34) fluidly interconnected between the second water collector (30) and the at least one water injector (22).

6. The reciprocating gaseous fuel combustion engine (10) of any one of the preceding claims, further comprising:
a purification device (32) fluidly connected downstream of the at least one water injector (22); and/or
a water cooler fluidly connected downstream of the at least one water injector (22).

7. The reciprocating gaseous fuel combustion engine (10) of any one of claims 4 to 6, further comprising a control unit (24) configured to control the first pump (20) and the second pump (34), the control unit (24) activating the second pump (34) if the first pump (20) delivers a water amount below a preset water threshold.

8. A method for controlling a reciprocating gaseous fuel combustion engine (10), the method comprising:
cooling a mixture of charge air and gaseous fuel and, thereby, condensing water;
collecting the condensed water; and
providing the collected condensed water for water injection to or upstream of a combustion zone of the reciprocating gaseous fuel combustion engine (10).

9. The method of claim 8, further comprising:
pressurising the charge air before cooling the charge air; or
pressurising the mixture of charge air and gaseous fuel before cooling the mixture.

10. The method of claim 8 or 9, further comprising:
combusting a mixture of charge air and fuel and, thereby, generating exhaust gas;
cooling the exhaust gas and, thereby, condensing water;
collecting the condensed water from the exhaust gas; and
providing the collected condensed water from the exhaust gas for water injection.

11. The method of any one of claims 8 to 10, further comprising:
cooling the collected condensed water; and/or
purifying the collected condensed water.

12. The method of claim 10 or 11, further comprising:
determining an amount of condensed water from the charge air, or the mixture of charge air and gaseous fuel;
comparing the determined condensed water amount with a preset water threshold; and
providing the collected condensed water from the exhaust gas for water injection only if the determined condensed water amount is below the preset water threshold.

## Patentansprüche

1. Gaskraftstoff-Kolbenverbrennungskraftmaschine (10) mit:
einer Verbrennungseinheit (12), die dazu ausgebildet ist, eine Ladeluft-Gaskraftstoff-Strömung aufzunehmen,
mindestens einem Wasserinjektor (22), der dazu ausgebildet ist, Wasser in die oder stromaufwärts von der Verbrennungseinheit (12) einzuspritzen,
einem ersten Kühler (16), der in Fluidverbindung stromaufwärts von der Verbrennungseinheit (12) vorgesehen und dazu ausgebildet ist, ein Ladeluft-Gaskraftstoff-Gemisch zu kühlen, und
einem ersten Wassersammler (18), der in Fluidverbindung zwischen dem ersten Kühler (16) und dem mindestens einem Wasserinjektor (22) vorgesehen ist, wobei der erste Wassersammler (18) dazu ausgebildet ist, kondensiertes Wasser zu sammeln und das kondensierte Wasser zu dem mindestens einen Wasserinjektor (22) zu leiten.

2. Gaskraftstoff-Kolbenverbrennungskraftmaschine (10) nach Anspruch 1, ferner mit
mehreren Zylindereinheiten (38), und
einem Lufteinlass (36), der in Fluidverbindung stromaufwärts von den mehreren Zylindereinheiten (38) vorgesehen ist,
wobei jede Zylindereinheit (38) einen Wasserinjektor (22) aufweist, der dazu ausgebildet ist, Wasser in die Zylindereinheit (38) einzuspritzen und/oder mindestens ein Wasserinjektor (22) dazu ausgebildet ist, Wasser in den Lufteinlass (36) einzuspritzen.

3. Gaskraftstoff-Kolbenverbrennungskraftmaschine (10) nach einem der vorherigen Ansprüche, mit mindestens einem von:
einer ersten Pumpe (20), die in Fluidverbindung zwischen dem ersten Wassersammler (18) und dem mindestens einen Wasserinjektor (22) vorgesehen ist, und/oder
mindestens einem Verdichter (14), der in Fluidverbindung stromaufwärts von dem ersten Kühler (16) vorgesehen ist.

4. Gaskraftstoff-Kolbenverbrennungskraftmaschine (10) nach einem der vorherigen Ansprüche, ferner aufweisend:
einen zweiten Kühler (28), der in Fluidverbindung stromabwärts von der Verbrennungseinheit (12) vorgesehen ist, und
einen zweiten Wassersammler (30), der in Fluidverbindung zwischen dem zweiten Kühler (28) und dem mindestens einen Wasserinjektor (22) vorgesehen ist, wobei der zweite Wassersammler (30) dazu ausgebildet ist, kondensiertes Wasser zu sammeln und das kondensierte Wasser zu dem mindestens einen Wasserinjektor (22) zu leiten.

5. Gaskraftstoff-Kolbenverbrennungskraftmaschine (10) nach Anspruch 4,
wobei die erste Pumpe (20) in Fluidverbindung stromabwärts von dem zweiten Wasserkollektor (30) vorgesehen ist, und/oder
wobei die Verbrennungskraftmaschine ferner eine zweite Pumpe (34) aufweist, die in Fluidverbindung zwischen dem zweiten Wassersammler (30) und dem mindestens einen Wasserinjektor (22) vorgesehen ist.

6. Gaskraftstoff-Kolbenverbrennungskraftmaschine (10) nach einem der vorherigen Ansprüche, ferner aufweisend:
eine Reinigungsvorrichtung (32), die in Fluidverbindung stromabwärts von dem mindestens einen Wasserinjektor (22) vorgesehen ist, und/oder
einen Wasserkühler, der in Fluidverbindung stromabwärts von dem mindestens einen Wasserinjektor (22) vorgesehen ist.

7. Gaskraftstoff-Kolbenverbrennungskraftmaschine (10) nach einem der Ansprüche 4 bis 6, ferner aufweisend eine Steuereinheit (24), die dazu ausgebildet ist, die erste Pumpe (20) und die zweite Pumpe (34) zu steuern, wobei die Steuereinheit (24) die zweite Pumpe (34) einschaltet, wenn die erste Pumpe (20) eine Wassermenge fördert, die unter einem vorgegebenen Wasserschwellwert ist.

8. Verfahren zum Steuern einer Gaskraftstoff-Kolbenverbrennungskraftmaschine (10), wobei das Verfahren aufweist:
Kühlen eines Ladeluft-Gaskraftstoff-Gemischs und dadurch Kondensieren von Wasser,
Sammeln des kondensierten Wassers, und
Zuführen des gesammelten kondensierten Wassers zur Wassereinspritzung in eine oder stromaufwärts von einer Verbrennungszone der Gaskraftstoff-Kolbenverbrennungskraftmäschine (10).

9. Verfahren nach Anspruch 8, ferner aufweisend:
Verdichten der Ladeluft vor dem Kühlen der Ladeluft, oder
Verdichten des Ladeluft-Gaskraftstoff-Gemischs vor dem Kühlen des Gemischs.

10. Verfahren nach Anspruch 8 oder 9, ferner aufweisend:
Verbrennen eines Ladeluft-Kraftstoff-Gemischs dadurch Erzeugen von Abgas,
Kühlen des Abgases und dadurch Kondensieren von Wasser,
Sammeln des kondensierten Wassers aus dem Abgas, und
Leiten des gesammelten kondensieren Wassers aus dem Abgas zur Wassereinspritzung.

11. Verfahren nach einem der Ansprüche 8 bis 10, ferner aufweisend:
Kühlen des gesammelten kondensierten Wassers, und/oder
Reinigen des gesammelten kondensierten Wassers.

12. Verfahren nach Anspruch 10 oder 11, ferner aufweisend:
Bestimmen einer Menge von kondensiertem Wasser aus der Ladeluft oder dem Ladeluft-Gaskraftstoff-Gemisch,
Vergleichen der bestimmten kondensierten Wassermenge mit einem vorgegebenen Wasserschwellwert, und
Leiten des gesammelten kondensierten Wassers aus dem Abgas zur Wassereinspritzung nur dann, wenn die bestimmte kondensierte Wassermenge unter dem vorgegebenen Wasserschwellwert ist.

## Revendications

1. Moteur à combustion à combustible gazeux alternatif (10), comprenant :
une unité de combustion (12) configurée de manière à recevoir un courant d'air de charge et de combustible gazeux ;
au moins un injecteur d'eau (22) configuré de manière à injecter de l'eau dans ou en amont de l'unité de combustion (12) ;
un premier refroidisseur (16) connecté de façon fluidique en amont de l'unité de combustion (12) et configuré de manière à refroidir un mélange d'air de charge et de combustible gazeux ; et
un premier collecteur d'eau (18) interconnecté de façon fluidique entre le premier refroidisseur (16) et ledit au moins un injecteur d'eau (22), le premier collecteur d'eau (18) étant configuré de manière à collecter de l'eau condensée et à fournir l'eau collectée audit au moins un injecteur d'eau (22).

2. Moteur à combustion à combustible gazeux alternatif (10) selon la revendication 1, comprenant en outre :
une pluralité d'unités de cylindre (38) ; et
une entrée d'air (36) connectée de façon fluidique en amont de la pluralité d'unités de cylindre (38),
dans lequel chaque unité de cylindre (38) comprend un injecteur d'eau (22) configuré de manière à injecter de l'eau dans l'unité de cylindre (38) et/ou au moins un injecteur d'eau (22) est configuré de manière à injecter de l'eau dans l'entrée d'air (36).

3. Moteur à combustion à combustible gazeux alternatif (10) selon l'une quelconque des revendications précédentes, comprenant en outre au moins un élément parmi :
une première pompe (20) interconnectée de façon fluidique entre le premier collecteur d'eau (18) et ledit au moins un injecteur d'eau (22) ; et /ou
au moins un compresseur (14) connecté de façon fluidique en amont du premier refroidisseur (16).

4. Moteur à combustion à combustible gazeux alternatif (10) selon l'une quelconque des revendications précédentes, comprenant en outre :
un deuxième refroidisseur (28) connecté de façon fluidique en aval de l'unité de combustion (12) ; et
un deuxième collecteur d'eau (30) interconnecté de façon fluidique entre le deuxième refroidisseur (28) et ledit au moins un injecteur d'eau (22), le deuxième collecteur d'eau (30) étant configuré de manière à collecter de l'eau condensée et à fournir l'eau collectée audit au moins un injecteur d'eau (22).

5. Moteur à combustion à combustible gazeux alternatif (10) selon la revendication 4, dans lequel :
la première pompe (20) est en outre connectée de façon fluidique en aval du deuxième collecteur d'eau (30) ; et/ou
le moteur à combustion comprend en outre une deuxième pompe (34) qui est interconnectée de façon fluidique entre le deuxième collecteur d'eau (30) et ledit au moins un injecteur d'eau (22).

6. Moteur à combustion à combustible gazeux alternatif (10) selon l'une quelconque des revendications précédentes, comprenant en outre :
un dispositif de purification (32) connecté de façon fluidique en aval dudit au moins un injecteur d'eau (22) ; et/ou
un refroidisseur d'eau connecté de façon fluidique en aval dudit au moins un injecteur d'eau (22).

7. Moteur à combustion à combustible gazeux alternatif (10) selon l'une quelconque des revendications 4 à 6, comprenant en outre une unité de commande (24) configurée de manière à commander la première pompe (20) et la deuxième pompe (34), l'unité de commande (24) activant la deuxième pompe (34) si la première pompe (20) délivre une quantité d'eau qui est inférieure à un seuil d'eau prédéterminé.

8. Procédé pour commander un moteur à combustion à combustible gazeux alternatif (10), le procédé comprenant les étapes suivantes :
refroidir un mélange d'air de charge et de combustible gazeux et, de ce fait, condenser de l'eau,
collecter l'eau condensée ; et
utiliser l'eau condensée collectée pour réaliser une injection d'eau dans ou en amont d'une zone de combustion du moteur à combustion à combustible gazeux alternatif (10).

9. Procédé selon la revendication 8, comprenant en outre l'une des étapes suivantes :
pressuriser l'air de charge avant le refroidissement de l'air de charge ; ou
pressuriser le mélange d'air de charge et de combustible gazeux avant le refroidissement du mélange.

10. Procédé selon la revendication 8 ou 9, comprenant en outre les étapes suivantes :
brûler un mélange d'air de charge et de combustible et, de ce fait, générer un gaz d'échappement ;
refroidir le gaz d'échappement et, de ce fait, condenser de l'eau ;
collecter l'eau condensée à partir du gaz d'échappement ; et
utiliser l'eau condensée collectée à partir du gaz d'échappement pour réaliser une injection d'eau.

11. Procédé selon l'une quelconque des revendications 8 à 10, comprenant en outre les étapes suivantes :
refroidir l'eau condensée collectée ; et/ou
purifier l'eau condensée collectée.

12. Procédé selon la revendication 10 ou 11, comprenant en outre les étapes suivantes :
déterminer une quantité d'eau condensée à partir de l'air de charge, ou du mélange d'air de charge et de combustible gazeux ;
comparer la quantité d'eau condensée déterminée avec un seuil d'eau prédéterminé ; et
utiliser l'eau condensée collectée à partir du gaz d'échappement pour réaliser une injection d'eau uniquement si la quantité d'eau condensée déterminée est inférieure au seuil d'eau prédéterminé.
